(19) Europäisches Patentamt
European Patent Office
Office européen des brevets

(11) **EP 3 670 574 A1**

(12) **EUROPÄISCHE PATENTANMELDUNG**

(43) Veröffentlichungstag:
**24.06.2020 Patentblatt 2020/26**

(21) Anmeldenummer: 18214390.9

(22) Anmeldetag: **20.12.2018**

(51) Int Cl.:
*C08G 69/20* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **L. Brüggemann GmbH & Co. KG**
**74076 Heilbronn (DE)**

(72) Erfinder:
• **Epple, Thomas**
**74257 Untereisesheim (DE)**
• **Bruch, Matthias**
**74078 Heilbronn (DE)**

(74) Vertreter: **Grünecker Patent- und Rechtsanwälte**
**PartG mbB**
**Leopoldstraße 4**
**80802 München (DE)**

(54) **VERFAHREN ZUR HERSTELLUNG EINES KATALYSATORSYSTEMS, KATALYSATORSYSTEM, UND DESSEN VERWENDUNG FÜR DIE HERSTELLUNG VON GUSSPOLYAMID**

(57) Beschrieben wird ein Verfahren zur Herstellung eines Katalysatorsystems. Dazu wird mindestens ein Alkalimetallalkoholat in eine Lactamschmelze eingebracht und der entstandene Alkohol wird entfernt. Das so erhaltende Katalysatorsystem wird für die Herstellung von Gusspolyamid verwendet.

EP 3 670 574 A1

**Beschreibung**

Die vorliegende Erfindung betrifft ein Verfahren zur Herstellung eines Katalysatorsystems, geeignet zur Herstellung von Gusspolyamid, das erhaltene Katalysatorsystem und dessen Verwendung.

**Stand der Technik**

Gusspolyamid wird üblicherweise aus zwei flüssigen Komponenten (A und B) hergestellt, die jeweils im Wesentlichen aus Lactamen bestehen. Um die Reaktion schnell und bei Temperaturen unter 200 °C durchführen zu können, wird in die Komponente B (Aktivatorsystem) ein Aktivator und in die andere Komponente A ein Katalysator gegeben. Industriell werden als Katalysator am häufigsten Alkalimetalllactamate, insbesondere Natriumcaprolactamat verwendet. Einen derartigen Katalysator enthaltende Komponente A (Katalysatorsystem) wird hergestellt, indem ein Lactam mit einem Alkalimetallalkoholat aufgeschmolzen wird. Dabei entsteht das katalytisch aktive Lactamat. Die Schmelze aus Lactam und Alkalimetallactamat wird nach der Herstellung bis zur Verwendung im flüssigem Zustand gelagert. Aufgrund des Schmelzpunktes der Lactame müssen Temperaturen von 70-180 °C angewandt werden. Allerdings besteht das Problem, dass derartige Lactamat enthaltende Schmelzen Alterungserscheinungen zeigen, die die Aktivität und/oder das herzustellende Gusspolyamid nachteilig beeinträchtigen bzw. nachteilig sind aufgrund der Bildung von Ablagerungen in den Vorrichtungen zur Herstellung von Gusspolyamid.

Konventionelle Komponenten A weisen nach längerer Lagerung im geschmolzenem Zustand eine Trübung aufgrund der Bildung von unlöslichen Feststoffen, die bereits ohne die Zugabe eines Aktivators stattfindet. Dies kann als Polymer- und/oder Oligomerbildung des Lactams erklärt werden. Durch diese vorzeitige Polymer- und Oligomerbildung in der Katalysatorschmelze werden Ablagerungen in der Anlage gebildet, die entfernt werden müssen. Dadurch resultieren zusätzliche Reinigungskosten. Außerdem können unerwünschte Reaktionen nach dem Vermischen der Komponente A mit der Komponente B (die den Aktivator enthält) stattfinden.

Als Aktivator für die Komponente B können die nach dem Stand der Technik bekannten Isocyanate, Icocyanurate, Biurete, Allophanate, Uretdione und/oder Carbodiimide als Einzelverbindung oder als Mischung eingesetzt werden. Ebenfalls können die entsprechenden oligomerisierten, polymerisierten oder geblockten Verbindungen eingesetzt werden. Als Schutzgruppe zum Blockieren können zum Beispiel Lactame, Phenole, Oxime und/oder Epoxide eingesetzt werden. Die Aktivatoren können fest oder flüssig sein oder es können feste Aktivatoren durch Verwendung von Lösungsmitteln in flüssige Form gebracht werden. Als Aktivator kann Bruggolen® C20P eingesetzt werden. Bruggolen® C20P ist ein N,N'-Hexan-1,6-diylbis(hexahydro-2-oxo-1H-azepin-1-carboxamid, d.h. das mit Caprolactam geblockte Hexamethylendiisocyanat (HDI).

Verfahren zur Herstellung lactamhaltiger Katalysatorsysteme und Verfahren zu deren Stabilisierung sind an sich bekannt.

So beschreibt beispielsweise EP 238 143 B1 die Verbesserung der Lagerfähigkeit von Alkalimetallactamaten im geschmolzenem Zustand durch die Zugabe von 0,1-2 Gew.% Isopropanol oder einem aromatischen oder von einem aliphatischen Alkohol mit 4-18 Kohlenstoffatomen (mit Siedepunkten von 80-250 °C). Diese verbleiben jedoch in größeren Mengen bis 2 Gew.% bei der Herstellung von Gusspolyamid in der Schmelze, was zu einer Gasbildung führen kann, die die Qualität des Polyamids verschlechtert. Weiterhin müssen solche zusätzlichen Komponenten bei Verwendungen des Gusspolyamids im Lebenskontakt bewertet und in der Zusammensetzung kontrolliert werden.

Die WO 2014/005791 A1 beschreibt ebenfalls einen Ansatz zur Verbesserung der Lagerfähigkeit von Alkalimetalllactamaten im geschmolzenem Zustand durch den Zusatz von mehr als 1 Gew.% eines Salzes oder Esters einer mit Heteroatomen substituierten organischen Säure. Auch hier verbleiben die zugegebenen stabilisierenden Komponenten im Polyamid, was die Qualität des Polyamids beeinflusst.

Die WO 2018/041642 A1 beschreibt einen Ansatz zur Verbesserung der Lagerfähigkeit von Kaliumlactamat im geschmolzenem Zustand. Dazu wird das Kaliumlactamat aus Lactam und metallischem Kalium hergestellt. Jedoch ist die Handhabung von metallischen Kalium gegenüber der Verwendung von großtechnisch verfügbaren Alkalimetallakoholaten sehr anspruchsvoll und birgt Risiken.

Die im Stand der Technik beschriebenen Ansätze zur Verbesserung der Lagerstabilität lactamhaltiger Katalysatorsysteme weisen demnach immer noch Nachteile auf.

**Aufgabe der vorliegenden Erfindung**

Die der vorliegenden Erfindung zugrundeliegende Aufgabe besteht somit in der Bereitstellung eines Verfahrens zur Herstellung eines Katalysatorsystems, eines Katalysatorsystems, und in dessen Verwendung für die Herstellung von Gusspolyamid, wobei die Nachteile, die mit dem Stand der Technik verbunden sind, nicht oder nur in vermindertem Maße auftreten.

Insbesondere soll das Verfahren in einfacher Art und Weise zu einem Katalysatorsystem führen, wobei leicht handhabende Ausgangsmaterialien zum Einsatz kommen. Gleichzeitig soll neben der erwünschten Stabilität aber kein Abfall der Katalysatoraktivität auftreten und vorzugsweise soll auf den Einsatz zusätzlicher Komponenten, wie Alkohole mit Siedepunkten höher als 80 °C, speziellen Säuren, etc. verzichtet werden können. Durch den Verzicht auf zusätzliche Komponenten wird die Zusammensetzung des damit hergestellten Gusspolyamids nicht verändert, sodass die zusätzlichen Komponenten bei Verwendungen des Gusspolyamids im Lebenskontakt nicht bewertet und in der Zusammensetzung kontrolliert werden müssen.

**Kurze Beschreibung der Erfindung**

Gelöst wird diese Aufgabe durch ein Verfahren gemäß Anspruch 1. Bevorzugte Ausführungsformen des vorliegenden Verfahrens sind in den Unteransprüchen 2 bis 9 und in der Beschreibung definiert. Darüber hinaus wird diese Aufgabe durch ein Katalysatorsystem gemäß den Ansprüchen 10 und 11 gelöst. Bevorzugte Ausführungsformen des vorliegenden Katalysatorsystems werden in den Unteransprüchen 12 bis 14 und in der Beschreibung definiert.

Insbesondere wird diese Aufgabe gelöst durch ein Verfahren zur Herstellung eines Katalysatorsystems durch Umsetzen von mindestens einem Lactam mit mindestens einem Alkalimetallalkoholat, umfassend die Schritte:

a) Erhitzen mindestens eines Lactams unter Erhalt einer Lactamschmelze;

b) Einbringen mindestens eines Alkalimetallalkoholats ausgewählt aus Alkalimetallmethanolat und Alkalimetallethanolat in die Lactamschmelze;

c) Entfernen des gebildeten Alkohols im Vakuum;

dadurch gekennzeichnet, dass die Menge von Alkalimetallethanolat zwischen 50 und 100 Gew.% bezogen auf die Gesamtmenge des Alkalimetallalkoholats beträgt.

Der überraschende Vorteil des vorliegenden Verfahrens besteht darin, dass das erhaltene Katalysatorsystem keine Spuren von höhersiedenden (> 80 °C) Alkoholen und keine anderen Zusatzstoffe außer Alkalimetalllactamat und Lactam enthält. Gleichzeitig ergibt sich durch die Auswahl der Alkalimetallalkoholat-Komponente in unerwarteter Weise eine erhöhte Stabilität. Damit wird beim Einsatz des erfindungsgemäß hergestellten Katalysators bei der Herstellung von Gusspolyamid aus Lactam eine gute Reaktivität beobachtet und es sind keine Anpassungen der Rezeptur und Gussparameter erforderlich, um Gusspolyamid mit hoher Qualität herzustellen. Gleichzeitig können die im Stand der Technik auftretenden Nachteile überwunden und die unerwünschte vorzeitige Polymer- oder Oligomerbildung unterdrückt werden.

Das vorliegende Verfahren ergibt ein Katalysatorsystem, welches zum einen eine ausgezeichnete Reaktivität bei der Verwendung zur Herstellung von Gusspolyamid aufweist, zum anderen aber auch eine längere Lagerzeit der temperierten Schmelze aus Katalysator und Lactam erlaubt.

**Detaillierte Beschreibung der Erfindung**

Nachfolgend wird das erfindungsgemäße Verfahren näher erläutert.

Im erfindungsgemäßen Verfahren wird mindestens ein Lactam bereitgestellt. "Mindestens ein Lactam" bedeutet im Rahmen der vorliegenden Erfindung sowohl genau ein Lactam als auch eine Mischung aus zwei oder mehreren Lactamen.

Unter "Lactam" werden erfindungsgemäß zyklische Amide verstanden, die im Ring 4 bis 12 Kohlenstoffatome, bevorzugt 6 bis 12 Kohlenstoffatome aufweisen.

Geeignete Lactame sind beispielsweise ausgewählt aus der Gruppe bestehend aus 4-Aminobutansäurelactam (γ-Lactam; γ-Butyrolactam; Pyrrolidon), 5-Aminopentansäurelactam (δ-Lactam; δ-Valerolactam; Piperidon), 6-Aminohexansäurelactam (ε-Lactam; ε-Caprolactam), 7-Aminoheptansäurelactam (ζ-Lactam; ζ-Heptanolactam; Önanthlactam), 8-Aminooktansäurelactam (η-Lactam; η-Oktanolactam; Capryllactam), 9-Nonansäurelactam (Θ-Lactam; Θ-Nonanolactam), 10-Dekansäurelactam (ω-Dekanolactam; Caprinlactam), 11-Undekansäurelactam (ω-Undekanolactam) und 12-Dodekansäurelactam (ω-Dodekanolactam; Laurolactam).

Besonders bevorzugt sind Lactame wie β-Lactam, γ-Lactam, δ-Lactam, ε-Lactam und Laurinlactam. Insbesondere bevorzugt sind ε-Lactame, ganz besonders Caprolactam.

Beispiele für geeignete Alkalimetallalkoholate sind Alkalimetallmethanolate und Alklimetallethanolate, besonders bevorzugt sind Natriummethanolat und Natriumethanolat, ganz besonders bevorzugt ist Natriummethanolat. Beispiele weiterer geeigneter Alkalimetalle sind Lithium und Kalium, so dass geeignete Alkalialkoholate auch ausgewählt werden können unter Lithiummethanolat und Lithiumethanolat, sowie Kaliummethanolat und Kaliumethanolat.

In dem vorliegenden Verfahren ist die Menge von Alkalimetallethanolat zwischen 50 und 100 Gew.%, bevorzugt 70 bis 100 Gew.%, weiter bevorzugt 90 bis 100 Gew.% und besonders bevorzugt 100 Gew.%, jeweils bezogen auf die Gesamtmenge des Alkalimetallalkoholats.

In dem vorliegenden Verfahren ist die Menge von Alkalimetallmethanolat zwischen 0 und 50 Gew.%, bevorzugt 0 bis 30 Gew.%, weiter bevorzugt 0 bis 10 Gew.% und insbesondere 0 Gew.-%, jeweils bezogen auf die Gesamtmenge des Alkalimetallalkoholats. In einer besonders bevorzugten Ausführungsform wird ausschließlich Alkalimetallethanolat bereitgestellt, sodass die Menge von Alkalimetallmethanolat 0 Gew.% beträgt. In diesem Fall entsteht ein methanolfreies Katalysatorsystem.

Es ist völlig unerwartet, dass durch den erfindungsgemäßen Einsatz einer Alkalimetallalkoholatkomponente, die zu mindestens 50 Gew.% aus Alkalimetallethanolat besteht, ein Katalysatorsystem erhalten werden kann, der bei ausgezeichneter Reaktivität eine verbesserte Stabilität in der Schmelze aufweist. Erfindungsgemäß kann so auf die im Stand der Technik vorgeschlagenen stabilisierenden Komponenten, wie höhersiedenden Alkohole oder Salze oder Ester einer mit Heteroatomen substituierten organischen Säure, verzichtet werden. Auch muss kein Alkalimetall in elementarer Form mit erhöhtem Gefahrenpotential zum Einsatz kommen, sondern es können konventionelle, leichter handhabbare Komponenten (Alkalimetallalkoholate) verwendet werden. Dies vereinfacht das Verfahren, da die Anzahl der zu verwendenden Komponenten klein bleibt und aufwändige Schutzmaßnahmen, notwendig beim Einsatz der elementaren Alkalimetalle, nicht erforderlich sind.

In dem erfindungsgemäßen Verfahren wird das Lactam oder Mischungen von Lactamen beispielsweise bei einer Temperatur im Bereich von 80 bis 180 °C, bevorzugt im Bereich von 90 bis 150 °C und insbesondere bevorzugt im Bereich von 100 bis 130 °C aufgeschmolzen.

In dem erfindungsgemäßen Verfahren wird die Einsatzmenge an Alkalimetallalkoholat so gesteuert, dass beispielsweise 8 bis 28 Gew.% Alkalimetalllactamat, bevorzugt 10 bis 25 Gew.% und insbesondere bevorzugt 15 bis 20 Gew.% Alkalimetallactamat in der Schmelze mit dem Lactam entstehen, jeweils bezogen auf das Gesamtgewicht der Katalysatorsystems.

Das Alkalimetallalkoholat bzw. die Mischung aus Alkalimetallalkoholaten wird vorzugsweise im festen Zustand als Pulver in die Lactamschmelze eingebracht.

Bevorzugt werden im erfindungsgemäßen Verfahren keine Alkohole eingesetzt. Durch den ausschließlichen Einsatz von Alkalimetallalkoholaten wird im erfindungsgemäßen Verfahren die Menge des abzutrennenden Alkohols minimiert.

Der gebildete Alkohol wird in dem erfindungsgemäßen Verfahren möglichst schnell, bevorzugt innerhalb von 5, starker bevorzugt innerhalb von 4 und insbesondere innerhalb von 3 Minuten entfernt, vorzugsweise durch das Anlegen eines Vakuums bis ein Druck von weniger als 100 mbar, besonders bevorzugt von weniger als 50 mbar und ganz besonders bevorzugt von weniger als 20 mbar erreicht wird.

Durch die vorstehend beschriebene Verfahrensführung enthält das erfindungsgemäß hergestellte Katalysatorsystem geringe Restalkoholgehalte. Diese liegen typischer Weise bei 0,3 Gew.% oder weniger, wie 0,2 Gew.% oder weniger, bevorzugt 0,1 Gew.% oder weniger, insbesondere bevorzugt enthält das erfindungsgemäße Katalysatorsystem keine anderen Alkohole als Spuren von Methanol und/oder Ethanol, bezogen auf die Gesamtmenge des erhaltenen Katalystorsystems.

Das vorstehend beschriebene Verfahren umfasst weiterhin einen Konfektionierungsschritt. Dabei wird das erhaltene Katalysatorsystem konfektioniert. Bevorzugt wird das Katalysatorsystem auf einer Schuppenwalze oder einem Pastillierband konfektioniert. Das erhaltene Katalysatorsystem kann im geschmolzenem oder im festen Zustand gelagert werden.

In einer besonders bevorzugten Ausführungsform umfasst das erfindungsgemäße Verfahren zur Herstellung eines Katalysatorsystems durch Umsetzen von Caprolactam mit Natriumethanolat die Schritte:

a) Erhitzen des Caprolactams unter Erhalt einer Caprolactamschmelze;

b) Einbringen des Natriumethanolats in die Caprolactamschmelze;

c) Entfernen des gebildeten Ethanols unter Erhalt des Katalysatorsystems.

In dem erfindungsgemäßen Verfahren kann bei einzelnen oder bei allen Verfahrensschritten unter Ausschluss von umgebendem Luftsauerstoff oder Luftfeuchtigkeit, zum Beispiel durch die Verwendung von Inertgas, beispielsweise Stickstoff, gearbeitet werden.

Weiterer Gegenstand der vorliegenden Erfindung ist ein Katalysatorsystem erhalten durch das Verfahren zur Herstellung eines Katalysatorsystems durch Umsetzen von mindestens einem Lactam mit mindestens einem Alkalimetallalkoholat, wie vorstehend beschrieben.

Nachfolgend wird das erfindungsgemäße Katalysatorsystem näher erläutert.

Erfindungsgemäß enthält das Katalysatorsystem mindestens ein Lactam. "Mindestens ein Lactam" bedeutet im Rahmen der vorliegenden Erfindung sowohl genau ein Lactam als auch eine Mischung aus zwei oder mehreren Lactamen.

Unter "Lactam" werden erfindungsgemäß zyklische Amide verstanden, die im Ring 4 bis 12 Kohlenstoffatome, bevorzugt 6 bis 12 Kohlenstoffatome aufweisen.

Geeignete Lactame sind beispielsweise ausgewählt aus der Gruppe bestehend aus 4-Aminobutansäurelactam (γ-Lactam; γ-Butyrolactam; Pyrrolidon), 5-Aminopentansäurelactam (δ-Lactam; δ-Valerolactam; Piperidon), 6-Aminohexansäurelactam (ε-Lactam; ε-Caprolactam), 7-Aminoheptansäurelactam (ζ-Lactam; ζ-Heptanolactam; Önanthlactam), 8-Aminooktansäurelactam (η-Lactam; η-Oktanolactam; Capryllactam), 9-Nonansäurelactam (Θ-Lactam; Θ-Nonanolactam), 10-Dekansäurelactam (ω-Dekanolactam; Caprinlactam), 1 1-Undekansäurelactam (ω-Undekanolactam) und 12-Dodekansäurelactam (ω-Dodekanolactam; Laurolactam).

Besonders bevorzugt sind Lactame wie β-Lactam, γ-Lactam, δ-Lactam, ε-Lactam (Caprolactam) und Laurinlactam. Insbesondere bevorzugt ist ε-Lactame, ganz besonders Caprolactam.

Bevorzugt enthält das erfindungsgemäße Katalysatorsystem keine weiteren Komponenten. Besonders bevorzugt besteht das erfindungsgemäße Katalysatorsystem aus Lactam und Lactamat.

Das erfindungsgemäße Katalysatorsystem enthält beispielsweise im Bereich von 8 bis 28 Gew.%, bevorzugt im Bereich von 10 bis 25 Gew.% und insbesondere bevorzugt im Bereich von 15 bis 20 Gew.% Alkalimetalllactamat, jeweils bezogen auf das Gesamtgewicht der Katalysatorsystems.

Die Summe der Gewichtsprozente der in dem Katalysatorsystem enthaltenen Komponenten sowie der gegebenenfalls enthaltenen weiteren Komponenten addieren sich üblicherweise zu 100 Gew.%.

In einer besonders bevorzugten Ausführungsform besteht das erfindungsgemäße Katalysatorsystem aus Caprolactam und 18 Gew.% Natrium-Caprolactamat, gekennzeichnet dadurch, dass das Katalysatorsystem nur Spuren von Alkohol enthält, bezogen auf die Gesamtmenge des Katalysatorsystems, die ausschließlich aus der Reaktion der zugesetzten Alkoholate entstehen. Besonders bevorzugt enthält das erfindungsgemäße Katalysatorsystem neben Spuren von Methanol und/oder Ethanol, insbesondere keine weiteren höhersiedenden Alkohole (> 80 °C), bezogen auf die Gesamtmenge des Katalysatorsystems.

Das erfindungsgemäße Katalysatorsystem kann als Schmelze (im geschmolzenen Zustand) oder als Feststoff (im festen Zustand) vorliegen. Bevorzugt wird das erfindungsgemäße Katalysatorsystem als Feststoff in der hier beschriebenen Variante (in Schuppenform oder als Pastillen) vor. Um das Katalysatorsystem als Feststoff zu erhalten, wird das Katalysatorsystem aus dem geschmolzenen Zustand mit einer Schuppenwalze oder einem Pastillierband konfektioniert.

Weiterer Gegenstand der vorliegenden Erfindung ist die Verwendung des erfindungsgemäßen Katalysatorsystems in der Polyamid-Herstellung, insbesondere in der Gusspolyamid-Herstellung.

Durch das erhaltene Katalysatorsystem kann sowohl in kontinuierlichen als auch in diskontinuierlichen Verfahren die Polymerisation von Lactamen zu Polyamiden (bei gleichzeitigem Einsatz der vorstehend beschrieben und notwendigen Aktivatorkomponente) direkt ausgelöst werden. Bevorzugt wird das diskontinuierliche Verfahren. Die Verwendung des erhaltenen Katalysatorsystems kann in Extrusions-, Spritzguss-, Pultrusions-, Monomerguss-, Resintransfermolding-, Reactioninjectionmolding und Rotormolding-Verfahren sowie zur Herstellung von Verbundwerkstoffen mit Polyamid als Matrix verwendet werden.

Die vorliegende Erfindung wird anhand der folgenden Ausführungsbeispiele näher beschrieben, welche jedoch keine Beschränkung der Erfindung darstellen.

**Bestimmung der Polymerisationsreaktivität T1 und T2**

Die Reaktivität des Katalysatorsystems wird durch die anionische Polymerisation am Zeitpunkt T1 [s], der Erstarrung der klaren Schmelze, d.h. der Meniskus der Schmelze bewegt sich nicht mehr bei der Bewegung des Reagenzglases und am Zeitpunkt T2 [s], der Eintrübung der Schmelze, bestimmt.

Geschmolzene Katalysatorkomponente A und eine geeignete Aktivatorkomponente B in Lactam polymerisieren zu Polyamid. Dabei ergeben sich verschiedene Polymerisationszeitpunkte, die visuell definiert werden.

In zwei Reagenzgläsern (A und B) werden jeweils 18,75 g Caprolactam eingewogen. Die Reagenzgläser werden jeweils mit einem Gummistopfen verschlossen. Anschließend werden die Reagenzgläser im Wärmebad bei 140° C solange temperiert, bis das Caprolactam geschmolzen ist. In Reagenzglas A werden 1,5 g des Katalysatorsystems eingewogen. In das Reagenzglas B werden 1,05 g des Aktivators Bruggolen ® C20P (N,N'-Hexan-1,6-diylbis(hexahydro-2-oxo-1H-azepin-1-carboxamid) gegeben. Anschließend wird mit einem Glasstab homogenisiert. Nach Erreichen einer Temperatur von 130° C im Reagenzglas A (die Temperaturmessung erfolgt dabei direkt im Reagenzglas), wird das Reagenzglas aus dem Wärmebad genommen und der Inhalt von Reagenzglas B zu dem von Reagenzglas A gegossen. Reagenzglas A wird nun erneut mit einem Stopfen verschlossen und der Inhalt wird durch kurzes, kräftiges Schütteln homogenisiert. Anschließend wird das Reagenzglas sofort wieder in das Temperierbad gestellt und gleichzeitig die Stoppuhr gestartet.

Der Verlauf der Polymerisation des Gemisches wird visuell festgestellt. Es werden folgende Zeitpunkte bestimmt.

T1: Die Masse folgt der Bewegung bei leichtem Hin- und Herschwenken nicht mehr.

T2: Auftreten einer Trübung der bis dahin klaren Lösung.

Die Reaktionszeiten T1 und T2 sind ein Maß für die Reaktivität des Systems. Je niedriger die T1 und T2 Werte, desto höher die Polymerisationsreaktivität.

**Bestimmung der Schmelzestabilität (48 h/85 °C)**

Die vorliegende Methode dient zur Bestimmung der Schmelzestabilität des Katalysatorsystems.

Das Katalysatorsystem schmilzt bei 65 °C und ergibt in der Regel eine klare Schmelze. In Abhängigkeit von der Temperatur, Konzentration und Standzeit wird die Schmelze jedoch langsam milchig-trüb und hochviskos. Diese unerwünschte Veränderung beruht auf der unerwünschten Reaktion des Katalysators und Caprolactam. Der sich bildende wasserunlösliche Niederschlag wird gravimetrisch ermittelt und stellt die Beurteilungsgröße für die Schmelzestabilität dar. Je geringer die Menge des gebildeten wasserunlöslichen Feststoffs, desto höher ist die Schmelzestabilität.

In einen getrockneten 250 ml Zwei-Halsrundkolben werden 50 g Caprolactam ($m_a$) (technisch) eingewogen. Der Rundkolben wird evakuiert und der Inhalt wird bis zu einer Temperatur von ca. 65 °C unter Vakuum gehalten. Anschließend wird der Rundkolben mit Stickstoff gefüllt und das Caprolactam aufgeschmolzen, wobei die Temperatur von 85 °C nicht überschritten werden darf. 100 g Katalysator ($m_b$) werden dazugeben und der Inhalt kurz unter Vakuum gehalten. Danach wird wieder auf Stickstoff umgestellt und der Kolbeninhalt vollständig aufgeschmolzen, wobei die Temperatur von 85 °C nicht überschritten werden darf. Der Kolbeninhalt wird 48 Stunden bei 85 °C im Trockenschrank temperiert. Nach dem Temperieren wird der Kolbeninhalt mit 100 ml Wasser versetzt und durch Rühren homogenisiert. Anschließend wird über einen Rundfilter abfiltriert und 3 mal mit je 100 ml Wasser alkalifrei gewaschen. Der auf dem Rundfilter verbleibender Rückstand ($m_R$) wird 2 h bei 105 °C getrocknet, im Exsikkator auf Raumtemperatur abgekühlt und dann gewogen.

Der prozentuale wasserunlösliche Anteil der Probe wird nach folgender Gleichung berechnet und in Gew.% angegeben.

$$= \frac{(m_R)}{(m_a + m_b)} \cdot 100\,\%$$

Gravimetrische Bestimmung von wasserunlöslichen Feststoff: Je mehr wasserunlöslicher Feststoff gebildet wird, desto trüber werden die Lösungen und desto höher ist die Auswaage des unlöslichen Anteils. Je niedriger der so ermittelte Feststoffgehalt ist, desto weniger unerwünschte Alterung ist aufgetreten.

**Bestimmung der Schmelzestabilität (5 h/85 °C)**

Anstatt der quantitativen gravimetrischen Bestimmung nach 48 Stunden, kann auch eine visuelle Beurteilung nach 5 h bei 85 °C erfolgen. Je mehr unerwünschte Alterung auftritt, desto trüber werden die Lösungen. Die hergestellten Katalysatorsysteme werden im Reagenzglas für 5 h bei 85 °C im Trockenschrank gelagert. Danach wird die Klarheit der Schmelze durch eine quantitative spektroskopische Methode bestimmt. Dazu werden 0,5 g Probe in 19,5 g deionisiertem Wasser gelöst und in einer Küvette mit 50 mm Schichtdicke auf Transmission untersucht. Die Transmission (Durchlässigkeit) wird bei der Wellenlänge = 450 nm bestimmt im Vergleich zu einer nur mit deionisiertem Wasser gefüllten Küvette mit 50 mm Schichtdicke. Je höher der Transmissionswert T in % der Schmelzestabilität (5h/85°C) ist, desto weniger Alterung ist aufgetreten, d.h. desto höher ist die Schmelzestabilität.

Im Idealfall beträgt der Transmissionswert T 100 %.

**Bestimmung des Restalkoholgehalts**

Der Restalkoholgehalt im Katalysatorsystem wird mittels Gaschromatographie bestimmt und ist dem Fachmann bekannt.

**Ausführungsbeispiele**

Die Herstellung der Alkalimetalllactame erfolgt in einem 500 Liter Kessel. Es werden 400 kg Caprolactam vorgelegt und aufgeschmolzen (ca. 80-140 °C). Das feste Alkalialkoholat (Natriumethanolat oder Natriummethanolat oder Mischungen davon) wird zugegeben (die Menge wird so gewählt, dass 18 Gew.% des Caprolactams zu Natriumcaprolactamat umgesetzt werden, d.h. 29 kg Natriummethanolat wenn ausschließlich Natriummethanolat zugesetzt wird). Der Behälter wird schnell verschlossen und Vakuum angelegt, um entstehenden flüchtigen Alkohol (Ethanol und/oder Methanol) zu entfernen. Nach der Entfernung des entstandenen Alkohols bei einem Innendruck von weniger als 100 mbar, wird die Zusammensetzung auf einer Schuppenwalze oder Pillierband konfektioniert. Die erhaltenen Zusammensetzungen in Form von festen Schuppen wurden wie vorstehend beschrieben evaluiert. Die Ergebnisse werden in den nachfolgenden Tabellen angegeben, zusammen mit den jeweils eingesetzten Alkalimetallalkoholaten.

Tabelle 1: Beispiele B1 und B2: Natriumethanolat:Natriummethanolat (1:1), Restalkoholgehalt ≤ 0,3 Gew.%

| Parameter | B1 | B2 |
|---|---|---|
| Reaktivität T1 [s] | 34 | 34 |
| Reaktivität T2 [s] | 54 | 53 |
| Schmelzestabilität [Gew.%] (48h/85°C) | 3,0 | 1,9 |
| Schmelzestabilität [%T] (5h/85°C) | 90 | 100 |

Tabelle 2: Vergleichsbeispiele VB1 und VB2: Ansätze mit Natriummethanolat (100 Gew.%), Restalkoholgehalt > 0,3 Gew.% Beispiele B3 und B4: Ansätze mit Natriumethanolat (100 Gew.%), Restalkoholgehalt ≤ 0,3 Gew.%

| Parameter | VB1 | VB2 | B3 | B4 |
|---|---|---|---|---|
| Reaktivität T1 [s] | 23 | 23 | 29 | 25 |
| Reaktivität T2 [s] | 46 | 43 | 49 | 45 |
| Schmelzestabilität (48h/85°C) [Gew.%] | 0,8 | 1,0 | 0,2 | 0,3 |
| Natriumlactamat [Gew.%] | 17,7 | 17,6 | 17,7 | 18,1 |
| Schmelzestabilität (5h/85°C) [%T] | 39 | 50 | 100 | 100 |

Die Vorteile des erfindungsgemäßen Verfahrens lassen sich wie folgt zusammenfassen:

Im Vergleich zu den Verfahren aus dem Stand der Technik bildet sich praktisch kein wasserunlöslicher Feststoff, was durch einen Vergleich mit den oben beschriebenen Versuchen gezeigt wird. Die Vergleichsbeispiele VB1 und VB2, hergestellt mit ausschließlich Natriummethanolat, zeigen eine Schmelzestabilität (48h/85°C) von 0,8 und 1 % und eine Schmelzestabilität (5h/85°C) von 39 und 50 %. Die Beispiele B1 und B2, hergestellt mit 50 Gew.% Natriumethanolat, zeigen zwar eine schlechtere Schmelzestabilität (48h/85°C) von 3,0 und 1,9 %, die Werte der Schmelzestabilität (5h/85°C) von 90 und 100 % sind jedoch deutlich besser. Bei den Beispielen B3 und B4, hergestellt mit 100 Gew.% Natriumethanolat, d.h. ohne Natruimmethanolat, wird sowohl eine verbesserte Schmelzestabilität (48h/85°C) von 0,2 und 0,3 %, als auch eine verbesserte Schmelzestabilität (5h/85°C) von 100 und 100 % gemessen. Erfindungsgemäß kann durch das Anlegen eines Vakuums bei der Katalysatorherstellung der überwiegende Anteil des entstehenden Alkohols abgezogen werden, so dass das Produkt im Wesentlichen frei von Alkoholen (Methanol/Ethanol) ist.

Die erfindungsgemäßen Beispiele zeigen, dass eine verbesserte Lagerstabilität im geschmolzenen Zustand von Alkalimetalllactamaten in Lactam durch alleinige Verwendung von Alkalimetallethanolat oder durch den Einsatz einer Mischung mit Alkalimetallmethanolat, mit mindestens 50 Gew.% Alkalimetallethanolat bei der Synthese, erreicht werden kann. Bei der Verwendung von 100 Gew.% Alkalimetallethanolat werden sowohl für die Schmelzestabilität (48h/85°C) als auch für die Schmelzestabilität (5h/85°C) die jeweils besten Werte erhalten. Bei der Umsetzung entstehendes Ethanol bzw. Ethanol-Methanol-Gemisch wird durch das Anlegen eines starken Vakuums möglichst schnell entfernt. Selbst wenn das beim Einsatz eines Alkalimetallmethanolats alleine ebenfalls erfolgt, stellt sich keine Verbesserung der Lagerstabilität ein. Der Vorteil gegenüber Verfahren aus dem Stand der Technik besteht darin, dass das Produkt keine Spuren von höhersiedenden (> 80 °C) Alkoholen und keine anderen Stoffe als Alkalimetall(capro)lactamat und (Capro)lactam enthält. Damit wird beim Einsatz des erfindungsgemäßen Verfahrens zur Herstellung von Polyamid, insbesondere Polyamid-6 aus Caprolactam gute Reaktivität bei der Gusspolyamid-Herstellung beobachtet und es sind keine Anpassungen der Rezeptur und Gussparameter erforderlich, um hochwertiges Polyamid herzustellen.

Bei der Gusspolyamid-Herstellung kann das durch das erfindungsgemäße Verfahren erhältliche Katalysatorsystem eingesetzt werden, wobei die Verwendung des erfindungsgemäß erhaltenen Katalysatorsystems bei den Gusspolyamidteilen zu einer ausgezeichneten Kristallinität, zu einer konstanten Reaktivität und zu länger realisierenden Lagerzeiten der temperierten Schmelze aus Katalysator und Lactam führt. Ferner wird durch das erfindungsgemäße Verfahren ein Lactamat-Katalysator für die Polyamid-Herstellung bereitgestellt, welcher eine geringe Schwankung im Wirkstoffgehalt Natrium-(Capro)lactamat aufweist. Bei der Polyamid-Herstellung unter Verwendung des erfindungsgemäßen Lactamats als Katalysator können daher geringere Mengen an Katalysator verwendet werden und konstante Polymerisationszeiten realisiert werden.

Bereits bei der Lagerung der Katalysatorsysteme findet teilweise unerwünschte Reaktion des Katalysators mit (Capro)lactam zu einem wasserunlöslichen Feststoff statt. Die Nachteile des Vorhandenseins von wasserunlöslichen Feststoff, bestehend aus Polymeren und Oligomeren, im Katalysatorsystem bestehen einerseits darin, dass höhere Kosten zur Reinigung der Vorrichtungen auftreten. Andererseits treten durch den hohen Polymer- und Oligomergehalt bei der Polymerisation Inhomogenitäten auf. Da innerhalb der Polymerisationszone unterschiedliche Polymerisationsgeschwindigkeiten auftreten, kommt es zur Bildung von Inhomogenitäten im resultierenden Polymer. Wie im Vergleich der erfindungsgemäßen Beispiele mit den Vergleichsbeispielen gezeigt wurde, ist es mit dem erfindungsgemäßen Verfahren überraschend gelungen, den Anteil der in der Polymerisation störenden wasserunlöslichen Feststoffe auf einen sehr geringen Anteil zu reduzieren.

## Patentansprüche

1. Verfahren zur Herstellung eines Katalysatorsystems durch Umsetzen von mindestens einem Lactam mit mindestens einem Alkalimetallalkoholat umfassend die Schritte:

   a) Erhitzen mindestens eines Lactams unter Erhalt einer Lactamschmelze;
   b) Einbringen mindestens eines Alkalimetallalkoholats ausgewählt aus Alkalimetallmethanolat und Alkalimetallethanolat in die Lactamschmelze;
   c) Entfernen des gebildeten Alkohols;

   **dadurch gekennzeichnet, dass** die Menge von Alkalimetallethanolat zwischen 50 und 100 Gew.% bezogen auf die Gesamtmenge des Alkalimetallalkoholats ist.

2. Verfahren nach Anspruch 1, **dadurch gekennzeichnet, dass** die Menge von Alkalimetallethanolat zwischen 70 und 100 Gew.% bezogen auf die Gesamtmenge des Alkalimetallalkoholats ist.

3. Verfahren nach einem der Ansprüche 1 oder 2, **dadurch gekennzeichnet, dass** das Alkalimetallalkoholat Alkalimetallethanolat ist.

4. Verfahren nach einem der Ansprüche 1 bis 3, **dadurch gekennzeichnet, dass** das Lactam ausgewählt wird aus $\beta$-Lactam, $\gamma$-Lactam, $\delta$-Lactam, $\varepsilon$-Lactam und Laurinlactam.

5. Verfahren nach einem der Ansprüche 1 bis 4, **dadurch gekennzeichnet, dass** das Alkalimetallalkoholat ausgewählt wird aus Natriumalkoholat, Lithiumalkoholat und Kaliumalkoholat.

6. Verfahren nach einem der Ansprüche 1 bis 5, **dadurch gekennzeichnet, dass** das Lactam $\varepsilon$-Lactam ist.

7. Verfahren nach einem der Ansprüche 1 bis 6, **dadurch gekennzeichnet, dass** das Alkalimetallalkoholat Natriumethanolat ist.

8. Verfahren nach einem der Ansprüche 1 bis 7, **dadurch gekennzeichnet, dass** das erhaltene Katalysatorsystem einen Restalkoholgehalt von 0,3 Gew.% oder weniger aufweist, bezogen auf die Gesamtmenge des Katalysatorsystems.

9. Verfahren nach einem der Ansprüche 1 bis 8, **dadurch gekennzeichnet, dass** das Verfahren einen Konfektionierungsschritt umfasst.

10. Katalysatorsystem erhältlich durch das Verfahren nach einem der Ansprüche 1 bis 9.

**11.** Katalysatorsystem nach Anspruch 10, **dadurch gekennzeichnet, dass** das Katalysatorsystem einen Restalkoholgehalt von 0,3 Gew.% oder weniger aufweist.

**12.** Katalysatorsystem nach einem der Ansprüche 10 oder 11, **dadurch gekennzeichnet, dass** die Menge des Alkalimetalllactamats zwischen 8 und 28 Gew.% bezogen auf die Gesamtmenge des Katalysatorsystems beträgt.

**13.** Katalysatorsystem nach einem der Ansprüche 10 bis 12, **dadurch gekennzeichnet, dass** das Alkalimetalllactamat ausgewählt wird aus Lithiumlactamat, Natriumlactamat und Kaliumlactamat.

**14.** Katalysatorsystem nach einem der Ansprüche 10 bis 13, **dadurch gekennzeichnet, dass** das das Lactam ausge-wählt wird aus $\beta$-Lactam, $\gamma$-Lactam, $\delta$-Lactam, $\epsilon$-Lactam und Laurinlactam.

**15.** Verwendung des Katalysatorsystems nach einem der Ansprüche 10 bis 14 bei der Herstellung von Gusspolyamid.

Europäisches
Patentamt

European
Patent Office

Office européen
des brevets

**EUROPÄISCHER RECHERCHENBERICHT**

Nummer der Anmeldung

EP 18 21 4390

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 106 432 714 A (NAT UNIV DONG HWA; NANTONG TIANJIAN NEW MAT TECH CO LTD) 22. Februar 2017 (2017-02-22) * Embodiment 2 * ----- | 1-11, 13-15 | INV. C08G69/20 |
| X | CN 104 004 346 A (GUANGZHOU NANFANG NYLON PRODUCTS CO LTD) 27. August 2014 (2014-08-27) * Embodiment 4 * ----- | 1-6, 8-11, 13-15 | |
| X | CN 108 262 994 A (UNIV JIANGSU SCIENCE & TECH) 10. Juli 2018 (2018-07-10) * Beispiel 3 * ----- | 1-11, 13-15 | |
| X A | DE 14 95 132 A1 (BASF AG) 30. Januar 1969 (1969-01-30) * Beispiele und Tabelle * ----- | 10-15 1-9 | |
| X A | US 5 747 634 A (SCHMID EDUARD [CH] ET AL) 5. Mai 1998 (1998-05-05) * Spalte 7; Tabelle 1 * ----- | 10-15 1-9 | |
| X A | EP 2 789 641 A1 (BASF SE [DE]) 15. Oktober 2014 (2014-10-15) * Absatz [0102] * ----- | 10-15 1-9 | RECHERCHIERTE SACHGEBIETE (IPC) C08G |

Der vorliegende Recherchenbericht wurde für alle Patentansprüche erstellt

| Recherchenort | Abschlußdatum der Recherche | Prüfer |
|---|---|---|
| München | 11. Juni 2019 | Barrère, Matthieu |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 18 21 4390

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-2019

| Im Recherchenbericht angeführtes Patentdokument | Datum der Veröffentlichung | Mitglied(er) der Patentfamilie | Datum der Veröffentlichung |
|---|---|---|---|
| CN 106432714 A | 22-02-2017 | KEINE | |
| CN 104004346 A | 27-08-2014 | KEINE | |
| CN 108262994 A | 10-07-2018 | KEINE | |
| DE 1495132 A1 | 30-01-1969 | DE 1495132 A1<br>FR 1406731 A | 30-01-1969<br>23-07-1965 |
| US 5747634 A | 05-05-1998 | AU 719521 B2<br>CN 1161976 A<br>DE 19603303 A1<br>EP 0786485 A2<br>IN 190935 B<br>JP H09208689 A<br>KR 970059200 A<br>PL 318124 A1<br>US 5747634 A | 11-05-2000<br>15-10-1997<br>07-08-1997<br>30-07-1997<br>06-09-2003<br>12-08-1997<br>12-08-1997<br>04-08-1997<br>05-05-1998 |
| EP 2789641 A1 | 15-10-2014 | BR 112013008416 A2<br>CN 103237832 A<br>CN 105601911 A<br>EP 2625215 A1<br>EP 2789641 A1<br>JP 5857055 B2<br>JP 2013538928 A<br>KR 20130118326 A<br>MY 163168 A<br>WO 2012045806 A1 | 28-06-2016<br>07-08-2013<br>25-05-2016<br>14-08-2013<br>15-10-2014<br>10-02-2016<br>17-10-2013<br>29-10-2013<br>15-08-2017<br>12-04-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 238143 B1
- WO 2014005791 A1
- WO 2018041642 A1